# DEMANDE DE BREVET EUROPEEN

(11) **EP 4 692 958 A1**
(43) Date de publication de la demande: **11.02.2026**
(21) Numéro de dépôt: 25184060.9
(22) Date de dépôt: 19.06.2025
(51) Int. Cl.: G04B 19/30

(54) **DISPOSITIF D'AFFICHAGE LUMINEUX POUR UNE PIÈCE D'HORLOGERIE, NOTAMMENT POUR UNE MONTRE COMPRENANT DES MOYENS AMÉLIORANT LE RENDU VISUEL DE LA PIÈCE D'HORLOGERIE**

(30) Priorité: 09.08.2024 EP 24193808
(71) Demandeur: The Swatch Group Research and Development Ltd, 2074 Marin (CH)
(72) Inventeur: GERNEZ, Cyrille, 2017 Boudry (CH)
(74) Mandataire: ICB SA

(57) **Abrégé**

Un aspect de l'invention concerne un dispositif d'affichage (1) lumineux configuré pour être agencé dans un boîtier de montre, le dispositif d'affichage (1) comprenant un cadran (2) comportant un corps de cadran (20) pourvu d'un trou central et présentant une face supérieure (21), au moins une aiguille (3, 4, 5) disposée au-dessus du cadran (2) et montée sur un arbre rotatif traversant le trou central du corps de cadran (20), l'aiguille (3, 4) comportant une couche formant guide de lumière (31, 41) agencée pour diffuser tout ou partie d'un flux lumineux émis par un module d'éclairage (70) comprenant un espace cloisonné ouvert (10) délimité par un fond (26) formé par un support de cadran (7) et par une paroi périphérique (22) formant un écran venue de matière avec ledit cadran, ladite paroi (22) étant positionnée autour de l'arbre rotatif de l'aiguille (3, 4, 5) et s'étendant au-dessus du corps de cadran (20) sur une hauteur définie, ledit module d'éclairage (70) comprenant une source de lumière (6) disposée sur le fond (26) de cet espace (10) en étant agencée pour émettre un flux lumineux en direction de l'aiguille (3, 4, 5) de manière à éclairer celle-ci par-dessous..

## Description

### Domaine technique de l'invention

L'invention concerne le domaine de l'affichage des pièces d'horlogerie, notamment des montres, et en particulier l'affichage lumineux de telles pièces.

L'invention concerne plus particulièrement un dispositif d'affichage lumineux pour une pièce d'horlogerie, ledit dispositif comprenant un cadran comportant un corps de cadran pourvu d'un trou central et présentant une face supérieure, au moins une aiguille disposée au-dessus du cadran et montée sur un arbre rotatif traversant le trou central du corps de cadran, l'aiguille comportant une couche formant guide de lumière agencée pour diffuser tout ou partie d'un flux lumineux émis par une source de lumière et au moins une source de lumière agencée pour émettre un flux lumineux en direction de l'aiguille de manière à éclairer celle-ci par-dessous, ladite source de lumière étant située à un niveau inférieur à celui de la face supérieure du cadran.

### Arrière-plan technologique

On connait de la demande de brevet EP3845974 un dispositif d'affichage lumineux pour une pièce d'horlogerie, comprenant des aiguilles d'affichage lumineuses mobiles en rotation autour d'un axe de rotation comportant une couche guide de lumière transparente arrangée pour recevoir et transmettre le flux lumineux d'une source de lumière, un cadran disposé au-dessous des aiguilles d'affichage et au moins une source stationnaire d'éclairage arrangée pour illuminer les aiguilles par-dessous. La source stationnaire d'éclairage comporte avantageusement des LEDs disposées autour de l'axe des aiguilles d'affichage

Afin d'éviter ou du moins limiter les points lumineux intenses (hotspots) indésirables en vue directe, les LEDs sont positionnées au-dessous de la face supérieure du cadran.

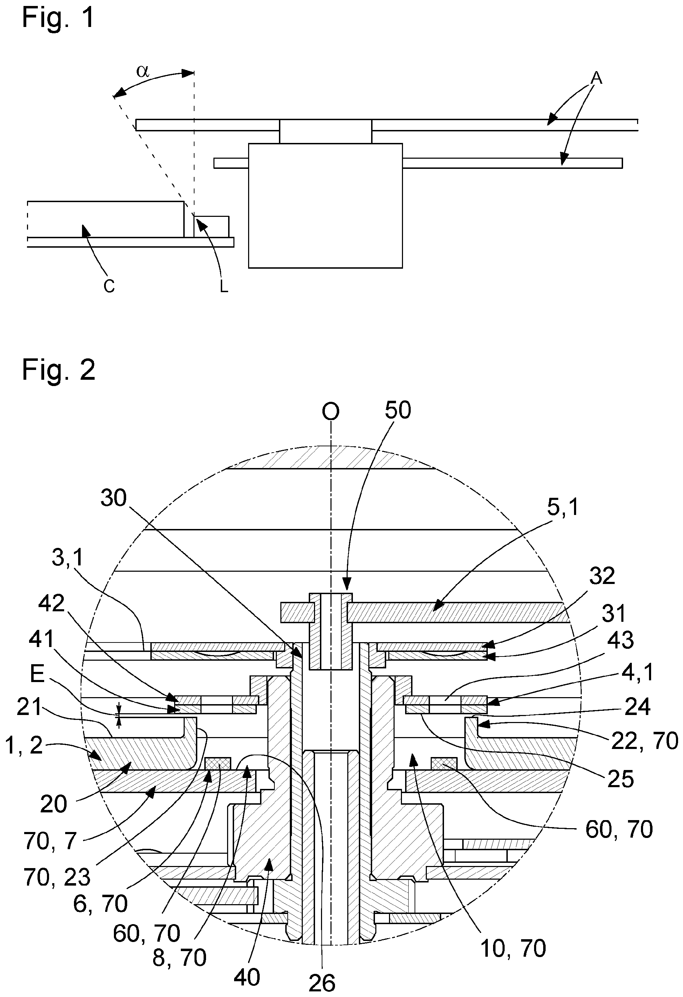

Ce positionnement des LEDs à distance des aiguilles d'affichage présente l'inconvénient d'impacter le rendement optique. Par ailleurs, dans le cas d'une construction simple, c'est-à-dire dans une construction dans laquelle le dispositif d'affichage est dépourvu d'élément optique additionnel entre les LEDs et les aiguilles d'affichage d'une part, et les distances et dimensions ont été optimisées pour tenter d'améliorer le rendement optique d'autre part, les LEDs sont visibles par l'utilisateur lorsque le dispositif d'affichage est observé selon un angle d'observation supérieur à environ 30 degrés par rapport à l'axe de rotation des aiguilles. La figure 1 illustre une représentation de l'angle minimal à partir duquel les LEDs sont visibles. Sur cette figure, les références C, L et A désignent respectivement un cadran, une LED et une aiguille d'affichage, la référence α désignant l'angle d'observation.

L'invention vise à remédier à ces problèmes en proposant un dispositif d'affichage lumineux pour une pièce d'horlogerie, notamment pour une montre en particulier une montre bracelet, évitant les hotspots ainsi qu'une vue directe sur la source de lumière tout en favorisant un dimensionnement et arrangement optimaux des composants du dispositif d'affichage.

Le dispositif d'affichage lumineux selon l'invention a également pour objet de permettre une réduction des fuites lumineuses.

Le dispositif d'affichage lumineux selon l'invention a également pour objet d'améliorer le rendement optique.

Le dispositif d'affichage lumineux selon l'invention a également pour objet d'offrir un rendu visuel amélioré, tant en termes de rendu optique que de rendu esthétique extérieur de la pièce d'horlogerie comprenant un tel dispositif d'affichage.

### Résumé de l'invention

A cet effet, l'invention propose un dispositif d'affichage lumineux configuré pour être agencé dans un boîtier de montre, le dispositif d'affichage comprenant un cadran comportant un corps de cadran pourvu d'un trou central et présentant une face supérieure, au moins une aiguille disposée au-dessus du cadran et montée sur un arbre rotatif traversant le trou central du corps de cadran, l'aiguille comportant une couche formant guide de lumière agencée pour diffuser tout ou partie d'un flux lumineux émis par un module d'éclairage comprenant un espace cloisonné ouvert délimité par un fond formé par un support de cadran et par une paroi périphérique formant un écran venue de matière avec ledit cadran, ladite paroi étant positionnée autour de l'arbre rotatif de l'aiguille et s'étendant au-dessus du corps de cadran sur une hauteur définie, ledit module d'éclairage comprenant une source de lumière disposée sur le fond de cet espace en étant agencée pour émettre un flux lumineux en direction de l'aiguille de manière à éclairer celle-ci par-dessous.

Par « hauteur définie », on entend une hauteur suffisante pour masquer la source de lumière lorsque la pièce d'horlogerie est observée par un utilisateur quel que soit l'angle d'observation. La hauteur sera donc définie en fonction du dimensionnement des composants de la pièce d'horlogerie concernés (cadran, aiguille(s), source de lumière) et de leur positionnement les uns par rapport aux autres. Cette hauteur est également définie pour aménager un écart suffisant pour une aération de l'espace cloisonné afin de réguler la température dans cet espace qui peut être amenée à varier sous l'effet de la chaleur susceptible d'être générée par la source lumière. Cette hauteur définie un écart dit écart d'aération de l'espace entre un sommet 24 de la paroi 22 et une face interne 25 de l'aiguille inférieure 4.

Ainsi, grâce à la présence de la paroi périphérique défini ci-dessus, la source de lumière est rendue non visible quel que soit l'angle d'observation avec lequel la pièce d'horlogerie est observée, et les hotspots en vue directe évités. Il peut ainsi être proposé un dispositif d'affichage lumineux ayant un dimensionnement et un arrangement optimaux sans présenter les inconvénients des dispositifs d'affichage de l'art antérieur (hotspots, fuites lumineuses) et dont le rendement optique est optimisé.

Avantageusement, le fond de l'espace cloisonné comprend une carte à circuits imprimés comportant la source de lumière.

Avantageusement, la source de lumière comprend au moins une diode électroluminescente et/ou une source laser miniature du type VCSEL par exemple.

Avantageusement, la source de lumière comprend une pluralité de diodes électroluminescentes et/ou des sources laser miniatures montées sur une carte à circuits imprimés et arrangées pour être réparties autour des arbres rotatifs.

Avantageusement, la paroi périphérique est formée d'un seul tenant avec le corps de cadran. En d'autres termes, la paroi périphérique et le cadran forment une seule et même pièce.

Avantageusement, la paroi périphérique comprend un sommet qui est dimensionné pour avoisiner l'aiguille inférieure.

Avantageusement, la paroi périphérique présente une face interne apte à réfléchir le flux lumineux émis par la source de lumière.

Avantageusement, la paroi périphérique est métallique, en polymère ou en céramique.

Avantageusement, l'aiguille présente un corps d'aiguille comportant au moins deux couches, l'une des couches étant une couche opaque, l'autre couche étant une couche transparente formant la couche guide de lumière.

Avantageusement, la source de lumière comprend des diodes électroluminescentes, et/ou des sources laser miniatures du type VCSEL par exemple, réparties autour de l'arbre rotatif de l'aiguille.

Avantageusement, la source de lumière est alignée verticalement avec une couche inférieure transparente formant une couche guide de lumière.

Avantageusement, l'espace cloisonné est ouvert sur une partie plane ou sensiblement plane de l'aiguille inférieure.

Avantageusement, l'aiguille inférieure comprend une partie plane ou sensiblement plane de sa face interne masquant/recouvrant totalement une ouverture de l'espace cloisonné.

Avantageusement, le dispositif d'affichage comprend plusieurs aiguilles fixées respectivement à des arbres rotatifs respectifs montés coaxiaux entre eux de sorte à tourner autour d'un axe de rotation commun, et en ce qu'au moins l'aiguille inférieure située au plus près du cadran présente au moins un orifice positionné au voisinage de l'arbre rotatif de sorte à permettre au flux lumineux de traverser l'aiguille inférieure pour qu'au moins une partie du flux lumineux soit absorbée par la couche guide de lumière de l'aiguille située immédiatement au-dessus de l'aiguille inférieure.

L'invention concerne également une montre telle qu'une montre bracelet, comprenant un boîtier comportant le dispositif d'affichage tel que précédemment décrit.

### Brève description des figures

D'autres caractéristiques et avantages de l'invention ressortiront de la description détaillée de l'invention qui va suivre, donnée à titre d'exemple et faite en référence aux figures annexées dans lesquelles :
- la figure 1 représente une vue schématique partielle d'un dispositif d'affichage lumineux de l'art antérieur, sur laquelle il est montré une représentation de l'angle minimal à partir duquel les LEDs sont visibles ;
- la figure 2 représente une vue partielle en coupe d'un dispositif d'affichage lumineux d'une montre selon un exemple de réalisation de l'invention ;
- la figure 3 illustre une vue du cadran équipant le dispositif d'affichage lumineux de la figure 2.

### Description détaillée de l'invention

La figure 2 montre une vue partielle en coupe d'un dispositif d'affichage 1 lumineux destiné à être agencé dans un boîtier d'une pièce d'horlogerie telle qu'un boîtier d'une montre.

Dans ce contexte, le boîtier de montre comprend donc ce dispositif d'affichage 1 comportant notamment un cadran 2, des aiguilles 3, 4, 5 disposées au-dessus du cadran 2 et une source de lumière 6 agencée pour émettre un flux lumineux en direction des aiguilles 3, 4, 5 de manière à éclairer celles-ci par dessous. Comme illustré, la source de lumière 6 est située à un niveau inférieur à celui de la face supérieure du cadran 2.

Plus particulièrement, et de manière connue, le cadran 2 comporte un corps de cadre 20 présentant une face supérieure 21 pourvu d'indices indiquant les heures et éventuellement les minutes et/ou les secondes, par exemple sous forme de numéros ou de tout autre signe prédéterminé comme par exemple des points.

Les aiguilles 3, 4, 5, au nombre de trois dans l'exemple illustré, comportent une aiguille des heures 3, une aiguille des minutes 4 et une aiguille des secondes 5. L'aiguille inférieure située au plus près du cadran 2 constitue l'aiguille minute 4, l'aiguille supérieure située immédiatement au-dessus de l'aiguille inférieure constituant l'aiguille heure 3 et l'aiguille supérieure située le plus loin du cadran 2 constituant l'aiguille seconde 5. Il est bien entendu évident qu'il s'agit d'un exemple de réalisation et qu'il peut être prévu un nombre différent d'aiguilles en fonction de la fonctionnalité que l'on souhaite conférer à la montre ainsi qu'un positionnement des aiguilles les unes par rapport aux autres qui diffère.

Les aiguilles 3, 4, 5 sont fixées de manière solidaire à des arbres 30, 40, 50 respectifs coaxiaux. Les arbres 30, 40, 50 sont entraînés en rotation par un mouvement d'horlogerie (non représenté) autour d'un axe de rotation commun. Les aiguilles 3, 4, 5, disposées au-dessus du cadran 2, forment avec les indices portés par la face supérieure 21 du corps de cadran 20 des moyens d'affichage du temps.

L'aiguille des heures 3 et l'aiguille des minutes 4 présentent respectivement un corps d'aiguille comprenant au moins deux couches superposées 31, 32, 41, 42, la couche inférieure 31, 41 étant une couche transparente formant une couche guide de lumière agencée pour diffuser tout ou partie d'un flux lumineux émis par la source de lumière 6 tandis que la couche supérieure 32, 42 est une couche opaque avantageusement métallique. Selon une configuration particulière, il peut être prévu une couche d'isolation optique entre la couche guide de lumière et la couche opaque (non représenté).

L'aiguille inférieure (dans l'exemple l'aiguille des minutes 4) comporte avantageusement au moins un orifice 43 situé au voisinage de l'arbre rotatif 40 sur lequel elle est montée de sorte à permettre au flux lumineux émis par la source de lumière 6 de traverser l'aiguille inférieure au travers de l'orifice 40 pour qu'au moins une partie du flux lumineux soit absorbée par la couche 31 guide de lumière de l'aiguille située immédiatement au-dessus de l'aiguille inférieure. Il est bien entendu évident qu'il s'agit d'un exemple de réalisation et qu'il peut être prévu que l'aiguille située immédiatement au-dessus de l'aiguille inférieure et éventuellement que l'aiguille supérieure, c'est-à-dire la plus éloignée du cadran soi(en)t pourvue(s) d'orifices situés au voisinage des arbres rotatifs de sorte que l'aiguille inférieure, l'aiguille immédiatement supérieure à l'aiguille inférieure et éventuellement l'aiguille supérieure soi(en)t rendue(s) lumineuse(s). Dans ce cas, ces aiguilles comprendront avantageusement une couche formant guide de lumière.

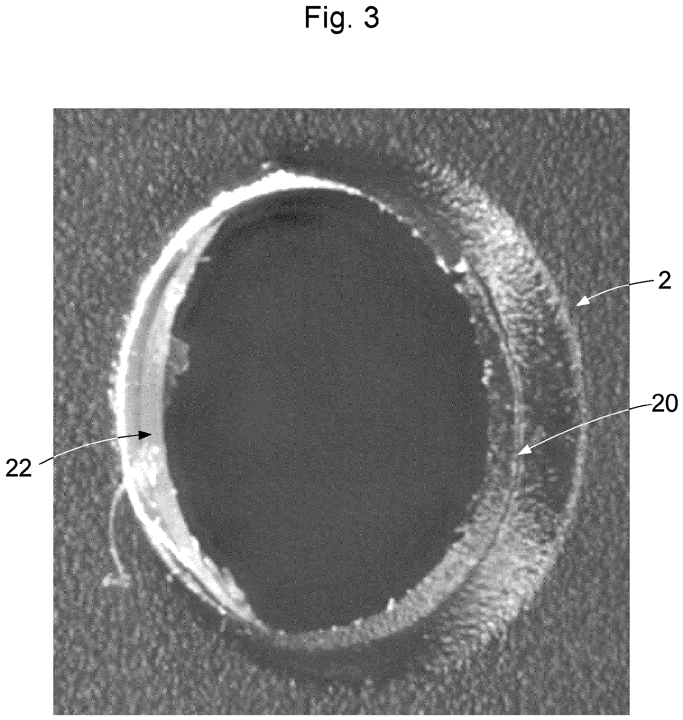

Le cadran 2, situé sous les aiguilles 3, 4, 5, présente un corps de cadran 20 sensiblement plan pourvu d'un trou central pour le passage des arbres rotatifs 30, 40, 50 sur lesquels les aiguilles 3, 4, 5 associées sont respectivement montées. Le corps de cadran comporte une paroi périphérique 22 former par un col du cadran s'étendant en direction des aiguilles, ladite paroi 22 délimitant le trou central. La figure 3 montre une vue du cadran 2.

Le cadran 2 repose sur un support 7 annulaire lequel présente, dans l'exemple illustré, un trou central traversé par les arbres coaxiaux 30, 40, 50. Le trou central du support présente un diamètre inférieur à celui du cadran 2 de sorte qu'un dégagement circulaire 8 périphérique est aménagé du côté interne du support 7. Par « côté interne du support », on entend le côté le plus proche du trou central du support 7. Dans le boîtier de montre, ce support 7 sépare le cadran 2 du mouvement. Autrement dit, le mouvement est agencé entre ce support et un fond du boîtier.

Dans cette configuration, le corps de cadran 20 est de préférence métallique en étant réalisé à partir d'un procédé de fabrication prévoyant des opérations d'emboutissage et/ou d'usinage. Dans une alternative, ce corps 20 peut être en polymère en étant réalisé à partir d'un procédé de fabrication prévoyant des opérations d'injection. Il peut dans une autre alternative, être en céramique en étant réalisé à partir d'un procédé de fabrication prévoyant des opérations de pressage ou encore de frittage.

La source de lumière 6 est située à un niveau inférieur à celui de la face supérieure 21 du cadran 2. Dans l'exemple illustré, elle est positionnée au voisinage de la partie inférieure du cadran 2, au niveau du dégagement circulaire 8 aménagé entre les arbres coaxiaux et le cadran 2.

La source de lumière 6 comporte avantageusement des diodes 60 électroluminescentes montées sur une carte à circuits imprimés et arrangées pour être réparties autour des arbres rotatifs. Avantageusement, la carte à circuits imprimés est portée par le support 7 du cadran ou intégrée à celui-ci.

Selon l'invention, le dispositif d'affichage 1 comprend au moins un élément formant écran positionné autour des arbres coaxiaux 30, 40, 50 et s'étendant au-dessus du corps de cadran 20 sur une hauteur définie de sorte à délimiter un espace cloisonné dans lequel la source de lumière 6 est logée. La source de lumière 6 est ainsi masquée quel que soit l'angle d'observation suivant lequel la montre est observée.

Cet espace cloisonné 10 est une cavité ouverte ou borgne. Il comprend donc une ouverture agencée en regard de la face interne de l'aiguille inférieure 4. Dans cette configuration, l'espace cloisonné 10 est ouverte sur une partie plane ou sensiblement plane de l'aiguille inférieure 4. Autrement dit, l'aiguille inférieure 4 comprend une partie plane ou sensiblement plane de sa face interne masquant ou recouvrant totalement cette ouverture de l'espace cloisonné 10.

Dans l'exemple illustré, l'élément formant écran est formé par le la paroi périphérique 22 aussi appelée col du cadran, cette paroi 22 étant réalisée/formée de préférence lors du procédé de fabrication du corps de cadran. Lorsque le corps de cadran est métallique, cet élément formant écran est alors réalisé/formé à partir d'opérations d'emboutissage et/ou d'usinage de la zone du corps de cadran 20 bordant le trou central. Ces opérations sont réalisées de sorte à créer une surélévation de matière suffisante pour former une paroi périphérique 22 s'étendant sur une hauteur telle que, lorsque le cadran 2 est en place dans le dispositif d'affichage 1, la surélévation s'étendant en direction des aiguilles 3, 4, 5 cache la source de lumière 6 tout en assurant un écart E suffisant pour assurer une aération de l'espace cloisonné 10. De manière préférée, la paroi périphérique 22 formant écran s'étend jusqu'au voisinage de l'aiguille inférieure. Avantageusement, la hauteur de la partie de la paroi périphérique comprise entre la face visible du cadran 2 et une face interne de l'aiguille inférieure 4 est comprise entre 0,32 millimètres et 0,38 millimètres, et de préférence de l'ordre de 0,35 millimètres.

Ainsi, conjointement à sa fonction consistant à masquer la source de lumière 6, la paroi périphérique 22 du cadran 2 assure également une fonction de réflecteur, une partie des rayons lumineux en provenance de la source de lumière 6 pouvant être réfléchie sur la face interne 23 de cette paroi 22 en direction des aiguilles 3, 4, 5. Cela a pour avantage d'améliorer le rendement optique. Le rendement optique est d'ailleurs d'autant plus amélioré qu'une partie des rayons lumineux réfléchie par les aiguilles peut être réfléchie à nouveau vers les aiguilles par la face interne de la paroi 22. Selon une variante de réalisation dans laquelle le cadran 2 est dans un matériau autre que métallique, il peut être prévu de revêtir la face interne 23 de la paroi périphérique 22 avec une couche réfléchissante.

On notera que la source de lumière est alignée verticalement avec la couche inférieure 31 transparente de l'aiguille inférieure 4, formant une couche guide de lumière.

La paroi périphérique 22 a avantageusement une forme tronconique présentant un évasement en direction des aiguilles 3, 4, 5. Cela a pour avantage de favoriser une redirection des rayons lumineux qui réfléchissent sur la face interne 23 de cette paroi 22 vers les aiguilles 3, 4, 5.

Dans l'exemple venant d'être décrit, la paroi périphérique 22 est formé d'un seul tenant avec le corps de cadran 20. Autrement dit, cette paroi 22 est venue de matière avec le cadran 2. Plus particulièrement, il constitue une partie intégrante de cadran 2. La réalisation d'un élément formant écran par déformation du cadran a pour avantage de limiter le risque d'avoir une pièce qui se sépare en cas de choc. Par ailleurs, l'ensemble obtenu (cadran et élément formant écran) est plus robuste et le montage des pièces simplifié, aucun assemblage n'étant à réaliser.

On notera que cette paroi périphérique 22 peut dans une variante de réalisation, être une pièce rapportée ou ajoutée, par exemple de forme tubulaire, distincte du cadran 2 et donc du corps de cadran. Dans une telle configuration, cette pièce est alors interposée entre ce cadran 2, ou le corps de cadran, et la source de lumière 6. Dans ce contexte, la matière constituant cette pièce rapportée est alors compatible avec toutes les matières, y compris la nacre, l'aventurine, le verre ou autre.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention.

### Nomenclature

1 - dispositif d'affichage
2 - cadran
3, 4, 5 - aiguilles respectivement des heures, des minutes, des secondes
6 - source de lumière
7 - support de cadran
8 - dégagement circulaire
10 - espace cloisonné
20 - corps de cadran
21 - face supérieure du cadran
22 - paroi périphérique de l'espace cloisonné
30, 40, 50 - arbres rotatifs
31, 41 - couche formant guide de lumière
32, 42 - couche opaque
60 - diode électroluminescente
70 - Module d'éclairage

## Revendications

1. Dispositif d'affichage (1) lumineux configuré pour être agencé dans un boîtier de montre, le dispositif d'affichage (1) comprenant un cadran (2) comportant un corps de cadran (20) pourvu d'un trou central et présentant une face supérieure (21), au moins une aiguille (3, 4, 5) disposée au-dessus du cadran (2) et montée sur un arbre rotatif traversant le trou central du corps de cadran (20), l'aiguille (3, 4) comportant une couche formant guide de lumière (31, 41) agencée pour diffuser tout ou partie d'un flux lumineux émis par un module d'éclairage (70) comprenant un espace cloisonné ouvert (10) délimité par un fond (26) formé par un support de cadran (7) et par une paroi périphérique (22) formant un écran venue de matière avec ledit cadran, ladite paroi (22) étant positionnée autour de l'arbre rotatif de l'aiguille (3, 4, 5) et s'étendant au-dessus du corps de cadran (20) sur une hauteur définie, ledit module d'éclairage (70) comprenant une source de lumière (6) disposée sur le fond (26) de cet espace (10) en étant agencée pour émettre un flux lumineux en direction de l'aiguille (3, 4, 5) de manière à éclairer celle-ci par-dessous.

2. Dispositif d'affichage (1) lumineux selon la revendication 1, dans lequel le fond (26) de l'espace cloisonné (10) comprend une carte à circuits imprimés comportant la source de lumière.

3. Dispositif d'affichage (1) lumineux selon l'une quelconque des revendications précédentes dans lequel la source de lumière (6) comprend au moins une diode électroluminescente et/ou une source laser miniature.

4. Dispositif d'affichage (1) lumineux selon l'une quelconque des revendications précédentes, dans lequel la source de lumière (6) comprend une pluralité de diodes électroluminescentes (60) et/ou des sources laser miniatures montées sur une carte à circuits imprimés et arrangées pour être réparties autour des arbres rotatifs.

5. Dispositif d'affichage (1) lumineux selon l'une quelconque des revendications précédentes, dans lequel la paroi périphérique (22) présente une face interne (23) apte à réfléchir le flux lumineux émis par la source de lumière (6).

6. Dispositif d'affichage (1) lumineux selon l'une quelconque des revendications précédentes, dans lequel la paroi périphérique est métallique, en polymère ou en céramique.

7. Dispositif d'affichage (1) lumineux selon l'une quelconque des revendications précédentes dans lequel ladite hauteur définie un écart dit écart d'aération de l'espace (10) entre un sommet (24) de la paroi (22) et une face interne de l'aiguille inférieure (4).

8. Dispositif d'affichage (1) lumineux selon l'une quelconque des revendications précédentes, dans lequel l'aiguille (3, 4, 5) présente un corps d'aiguille comprenant au moins deux couches, l'une des couches étant une couche opaque (32, 42), l'autre couche étant une couche transparente formant la couche guide de lumière (31, 41).

9. Dispositif d'affichage (1) lumineux selon l'une quelconque des revendications précédentes, dans lequel la source de lumière est alignée verticalement avec une couche inférieure (31) transparente formant une couche guide de lumière.

10. Dispositif d'affichage (1) lumineux selon l'une quelconque des revendications précédentes, dans lequel l'espace cloisonné (10) est ouvert sur une partie plane ou sensiblement plane de l'aiguille inférieure (4).

11. Dispositif d'affichage (1) lumineux selon l'une quelconque des revendications précédentes, dans lequel l'aiguille inférieure (4) comprend une partie plane ou sensiblement plane de sa face interne masquant/recouvrant totalement une ouverture de l'espace cloisonné (10).

12. Dispositif d'affichage (1) lumineux selon l'une quelconque des revendications précédentes, comprenant plusieurs aiguilles (3, 4, 5) fixées respectivement à des arbres rotatifs (30, 40, 50) respectifs montés coaxiaux entre eux de sorte à tourner autour d'un axe de rotation commun, et en ce qu'au moins l'aiguille (4) inférieure située au plus près du cadran (2) présente au moins un orifice positionné au voisinage de l'arbre rotatif (40) de sorte à permettre au flux lumineux de traverser l'aiguille (4) inférieure pour qu'au moins une partie du flux lumineux soit absorbée par la couche guide de lumière (31) de l'aiguille (3) située immédiatement au-dessus de l'aiguille (4) inférieure.

13. Montre comprenant un boîtier comportant le dispositif d'affichage (1) lumineux selon l'une quelconque des revendications précédentes.

14. Montre selon la revendication précédente, étant une montre bracelet.
